# EUROPEAN PATENT SPECIFICATION

(11) **EP 3 364 124 B1**
(45) Date of publication and mention of the grant of the patent: **23.10.2019**
(21) Application number: 18155741.4
(22) Date of filing: 08.02.2018
(51) Int. Cl.: H02S 20/20, H02S 20/00, F24S 25/636, F24S 25/00, F24S 25/613, F24S 25/634

(54) **DEVICE AND METHOD FOR FIXING SOLAR PANELS ON A SUPPORT RAIL FOR SOLAR PANELS**
VORRICHTUNG UND VERFAHREN ZUR BEFESTIGUNG VON SOLARPANEELEN AUF EINER TRAGSCHIENE FÜR SOLARPANEELE
DISPOSITIF ET PROCÉDÉ DE FIXATION DE PANNEAU SOLAIRE SUR UN RAIL DE SUPPORT POUR PANNEAUX SOLAIRES

(30) Priority: 08.02.2017 NL 2018346
(43) Date of publication of application: 22.08.2018
(73) Proprietor: Esdec B.V., 7418 EE Deventer (NL)
(72) Inventor: DE VOGEL, Vincent, 7418 EE Deventer (NL); DE VOGEL, Jeroen, 7418 EE Deventer (NL); DE BIE, Niek, 7418 EE Deventer (NL)
(74) Representative: Patentwerk B.V.

(56) References cited:
- EP-A1- 2 495 507
- EP-A1- 2 789 931
- EP-A2- 2 592 365
- WO-A1-03/098126
- WO-A2-2014/067623
- AU-A4- 2009 101 276
- CN-U- 202 049 989

## Description

The invention relates to a device for fixing solar panels on a support rail, in particular a support rail for solar panels. The invention also relates to an assembly of a device according to the invention and a support rail, in particular a support rail for solar panels, wherein the device is fastened on the support rail. The invention further relates to a method for fastening solar panels on a support rail by using a device according to the invention.

The fitting of solar panels on both flat and on sloping roofs is a commonly occurring activity and can be simplified by the use of a purpose-built mounting device. A known mounting device for the relatively simple and rapid mounting of solar panels on a sloping or non-sloping roof is described in NL1028379. The known mounting device comprises a roof hook, which can be coupled with the roof, and a support rail, which can be coupled with a free end of the roof hook and is arranged to support solar panels. The roof hook is arranged for cooperation with a part of the roof, in particular with a batten fitted on the roof. The solar panels are fixed on the support rail such that they are clamped in a secured manner by means of clamping elements, in particular end clamps or intermediate clamps, fastened on the support rail. The known clamping elements have various drawbacks. An end clamp is used to clamp a single solar panel and cannot be used to clamp two mutually adjacent solar panels. For this, an intermediate clamp, which is placed in between two mutually adjacent solar panels, is used to clamp both solar panels simultaneously. However, an intermediate clamp is not suitable to act as an end clamp; on the one hand owing to the fact that it is undesirable from a safety viewpoint and an aesthetic viewpoint to use (dangerously) projecting parts in the mounting device, and, on the other hand, because the intermediate clamp is structurally not suitable for being able to clamp just one solar panel in a durable and reliable manner. The applicability of the clamping elements is therefore limited to the specific aim for which the clamping element in question is designed, which leads to unwanted logistical and financial complications.

EP 2789931 discloses a holding device to fasten a framed solar panel on a support. The device comprises a head section that is suitable to interact with the surface module, a foot section that is suitable for interacting with the support and a connecting element that is suitable for linking the head section with the food section.

An object of the invention is to provide an improved clamping device with which at least one of the aforementioned drawbacks can be prevented.

To this end, the invention provides a device according to claim 1. The (clamping) device according to the invention has the great advantage that it is suitable for mounting of a (separate) shielding element (end cap), yet that this shielding element can be used, and will be used, if the at least one first clamping zone and the support rail mutually clamp at least one solar panel, because a final finishing of the device will in this case be desired. The shielding element therefore generally forms a loose component, which generally constitutes part of the device, and which generally can be releasably clamped, or at least can be secured, in the receiving space enclosed by the fastening element and the locking element. A user or installer can therefore choose on the spot whether or not to install the shielding element. The device according to the invention is arranged for fastening the shielding element in a secured, and preferably releasable, manner, and therefore safe manner, to the other components of the device, in particular the fastening element and the locking arm, by receiving a part of the shielding element in a receiving space defined by the locking arm and the fastening element. The locking arm is generally oriented substantially parallel with respect to a centre axis which runs from the second end to the first end of the fastening element. It is also conceivable that the locking arm and the aforementioned centre axis of the fastening element mutually enclose an angle which preferably lies between 0 and 10 degrees. This can not only facilitate the positioning of at least a part of the shielding element in the receiving space, but can also be advantageous if the locking arm is used as a lever, wherein a force exerted on the locking arm by the shielding element can possibly be transmitted to the first clamping zone in order to generate additional clamping force. The locking arm and the first clamping zone are preferably positioned at opposite ends of the clamping element. This ensures that the locking arm is arranged to secure the shielding element, if used, in a direction which runs substantially parallel to the support rail. At least a free end of the locking arm, and possibly the complete locking arm, will generally be situated at a distance from the fastening element. By positioning the free end, i.e. generally that end of the fastening element which is facing away from the clamping element, at a distance from the locking arm, an access opening to the receiving space is formed, via which access opening (a part of) the shielding element can be placed in the receiving space and - if so desired - can be removed from the receiving space. In the state secured by the locking arm and the fastening element, the shielding element preferably exerts a bias on the locking arm, which generally benefits the mutual securement. Moreover, such a bias, which is preferably directed in a direction facing toward the clamping element, will, as already stated above, push, or at least force the locking arm as a sort of lever in a direction facing toward the clamping element, which direction can result in an increasing downward clamping force which is exerted on a clamped solar panel by the first clamping zone. This is especially feasible if the clamping element is connected (to some extent) tiltably to the fastening element, for example via a hinge or fastening pin, and if the locking arm and the first clamping zone are positioned on opposite sides of the tipping point (or the hinge or the fastening pin). The fastening pin can otherwise constitute an (integral) part of the fastening element.

The orientation of the at least one clamping element and the at least one fastening element is preferably alterable. This makes it particularly possible to position the clamping element, or at least the first clamping zone, at greater distance from the fastening element during the placement of a solar panel to be clamped and to position it at a lesser distance away during the clamping of the solar panel. The clamping element can herein be coupled with the fastening element by means of a screw or other fastening pin, for example, wherein the effective screw length can preferably be altered in order to be able to regulate the distance between the clamping element, in particular the first clamping zone, and the fastening element. It is herein also conceivable that the fastening element comprises a screw, bolt, or other fastening pin, with which the clamping element is coupled in an (axially) rotatable manner. By altering the effective length of such a pin-shaped or peg-shaped fastening element, for example by (further) screwing the fastening element into the support rail and/or by using a nut which cooperates with the screw or bolt, the clamping force exerted by the clamping element can easily be regulated.

The fastening element can be formed from a single whole, yet can also be (modularly) constructed from a plurality of components. It is conceivable that the clamping element is substantially freely displaceable between the first end and the second end of the fastening element, wherein the fastening element especially has a limiting effect in order to limit the maximum displacement of the clamping element with respect to the support rail. Generally, the fastening element will keep the clamping element (as well as the locking arm) at a distance from the support rail, whereby the fastening element is often also referred to as a spacer.

In a preferred embodiment, the at least one clamping element is rotationally connected to the fastening element, preferably over an angle greater than or equal to 90 degrees. This rotation preferably takes place about the aforementioned centre axis of the fastening element. This centre axis runs generally substantially parallel to, or even coincides with, a longitudinal axis of the aforementioned fastening pin (if used). The rotatability of the clamping element with respect to the fastening element has the important advantage that the (lateral) position of both the first clamping zone and the locking arm with respect to the fastening element can be altered. This makes it possible, for example, to position the locking arm on an end side (instead of a longitudinal side) of the fastening element, whereby the clamping element can be made suitable for the multilateral clamping of solar panels. To this end, the at least one clamping element is preferably provided with at least two, preferably mutually spaced, second clamping zones arranged for bilateral clamping of solar panels, such that at least two solar panels, positioned on either side of the fastening element, are simultaneously clampingly fastened on the support rail by the clamping element. By using the second clamping zones, in addition to the at least one first clamping zone, the (clamping) device according to the invention acquires a multifunctional character, wherein the device can be used both as a (shielding) end clamp and as an intermediate clamp, which has significant advantages from a structural, economic and logistical viewpoint. Each clamping zone extends generally along a longitudinal side of the clamping element. The clamping element is therefore displaceable between two (or more) states: a first - unilaterally clamping - state, in which the clamping element is arranged for unilateral clamping of one or more solar panels and in which the shielding element can be fastened to the fastening element (by reception of at least a part of the shielding element in the receiving space formed between the locking arm and the fastening element), and a second - bilaterally clamping - state, in which the clamping element is arranged for bilateral clamping of solar panels and in which the shielding element is not installed. Each clamping zone is generally positioned on a bottom side of the clamping element. Each clamping zone is here positioned in the direction of the first end of the fastening element, and hence in the direction of the support rail. Optionally, one or more clamping zones are provided with a profiling and/or with a sealing element, so as to be able to engage a solar panel as stably as possible, which can benefit a stable clamping of the solar panel. The first clamping zone will in part generally (partially) overlap with multiple second clamping zones.

The fastening element comprises at the first end a plurality of coupling elements, wherein the coupling elements are jointly arranged for multilateral cooperation with the support rail. Preferably, the support rail, during the securing of the fastening element, is embraced by the coupling elements. In the coupled state, the one or more coupling elements preferably exert a bias on the support rail, whereby the fastening element is substantially fixed with respect to the support rail. It is herein advantageous if the one or more coupling elements are of deformable, in particular resilient, design. At least a part of each coupling element can be formed, for example, by a leaf spring, which leaf spring preferably constitutes an integral part of the fastening element, and can be formed, for example, by a leg (or arm) of the fastening element, which mutually separates the first end and the second end of the fastening element. Separate fastening elements, such as screws, are herein not required. A free end of each coupling element preferably comprises at least one hook-shaped member, which is arranged to (hookingly) cooperate with the support rail. Preferably, the coupling elements are arranged for coupling the fastening element in a slidable manner on a support rail. This means that the fastening element is slidable in the longitudinal direction of the support rail with respect to the support rail. This simplifies the positioning of the fastening element with respect to the support rail.

The locking arm can be displaceably connected to the clamping element, such that the mutual orientation of the locking arm and the clamping element is alterable. However, it is generally preferred if the locking arm is substantially rigidly connected, and preferably is integrally connected, to the clamping element. In this case, the clamping element and the locking arm is preferably produced from a single whole (one piece), for example of metal, such as stainless steel or aluminium. The locking arm is provided with at least one first securing element for securing the shielding element in the receiving space. The at least one first securing element is more preferably positioned on a side, facing toward the fastening element, of the locking arm. The first securing element comprises a securing tooth or a toothed profile, such as a saw tooth profile.

In a preferred embodiment, the device comprises at least one shielding element, wherein at least a part of the shielding element is received in a secured manner in the receiving space enclosed by the fastening element and the locking element, and wherein the shielding element shields at least a part of the fastening element. The shielding element can act as an end cap in order to finish off the total supporting structure for solar panels, as well as to shield the fastening element, to some extent, from weather influences, which benefits the durability of the device. The shielding element will herein preferably at least partially enclose the fastening element. This enclosure can be only unilateral, yet is preferably multilateral. The shielding element can be of substantially closed construction, for example. Generally, the shielding element will also be arranged for coupling to the support rail, whereby additional stability can be lent to a durable and reliable fastening of the device on the support rail, and hence to the clamping of one or more solar panels. The shielding element can herein cooperate with an end side of the support rail, whereby the device can be more intensively locked with respect to the support rail. In this case, a (projecting) part of the shielding element will generally be placed against the end side of the support rail, wherein this part of the shielding element preferably engages the end side of the support rail under bias. It is also conceivable, however, that the shielding element is arranged for shielding only a part of the fastening element which projects with respect to the support rail. In this construction variant, the shielding element will permanently be situated at a distance from the support rail. It is also conceivable, and generally also advantageous, if the shielding element is arranged for coupling in a slidable manner to the support rail. This means that the shielding element is slidable with respect to the support rail in the longitudinal direction of the support rail. This makes it easier to position the shielding element with respect to the support rail. In this construction variant, the shielding element will generally comprise at least one or more own coupling elements, arranged for coupling the shielding element on a support rail, in particular a support rail for solar panels. The shaping of the one or more coupling elements of the shielding element can herein substantially conform, or even be identical, to the one or more coupling elements of the fastening element. It is particularly advantageous if both the fastening element and the shielding element can be slidably connected to a support rail, whereby the whole device according to the invention is slidable with respect to the support rail. The shielding element is preferably provided with at least one second securing element arranged for cooperation with the first securing element of the locking arm. The second securing element is preferably complementary to the first securing element, whereby a stable securement of the shielding element with respect to the fastening element (as well as of the clamping element and the locking arm) can be realized. It is conceivable, and even advantageous, if the locking element is arranged for engaging the shielding element under bias. Play of the shielding element with respect to another part of the device can herewith be prevented, which generally benefits the stability of the securement. The shielding element can be made from various materials, such as of plastic and/or of metal, preferably stainless steel or aluminium.

The invention also relates to an assembly of at least one device according to the invention and a support rail, wherein the device is connected to at least one support rail by means of the at least one coupling element of each device. Preferably, the assembly comprises at least one solar panel, which is clamped in a secured manner between the support rail and the first clamping zone of the clamping element of at least one device, wherein the aforementioned device comprises at least one shielding element, wherein at least a part of the shielding element is received in a secured manner in the receiving space enclosed by the fastening element and the locking element, and wherein the shielding element shields at least a part of the fastening element. The assembly can comprise a plurality of solar panels, wherein at least one clamping element of at least one device is provided with at least two, preferably mutually spaced, second clamping zones arranged for bilateral clamping of solar panels, such that at least two solar panels, positioned on either side of the fastening element, are simultaneously clampingly fastened on the support rail by the clamping element of the aforementioned device.

The invention also relates to a method for fastening solar panels on a support rail by using at least one device according to the invention, comprising the steps: A) securing of the fastening element, in particular a spacer, on a support rail by means of the at least one coupling element, B) positioning of a part of at least one solar panel to be clamped in a receiving space formed between the first clamping zone of the clamping element and the support rail, C) placing of at least a part of a shielding element in a receiving space enclosed by the fastening element and the locking arm, such that at least a part of the fastening element is shielded by the shielding element, D) clamping of the at least one solar panel in a secured manner by the clamping element, and E) securing of the shielding element in the receiving space by the locking arm. Generally, step D) and step E) are carried out simultaneously. Preferably, during step D) and E), the distance between the fastening element and the at least one clamping element is reduced. Advantages of the method according to the invention and construction variants of the method according to the invention are already described in the above and are described in greater detail below.

The invention will be explained with reference to non-limiting illustrative embodiments represented in the following figures, in which:
Figure 1a shows a perspective view of a device according to the invention;
Figure 1b shows a first cross section of the device as shown in Figure 1a;
Figure 1c shows a second cross section of the device as shown in Figure 1a;
Figure 2a shows a perspective view of the device as shown in Figures 1a-c in a second orientation;
Figure 2b shows a first cross section of the device as shown in Figure 2a;
Figure 2c shows a second cross section of the device as shown in Figure 2a;
Figure 3a shows a first perspective view of an assembly of the device as shown in Figure 2a and a support rail;
Figure 3b shows a second perspective view of an assembly of the device as shown in Figure 2a and a support rail;
Figure 4a shows a perspective view of an assembly as shown in Figures 3a and 3b in combination with a first solar panel;
Figure 4b shows a perspective view of an assembly as shown in Figure 4a and a second solar panel;
Figure 5a shows a perspective view of the device as shown in Figures 1a and 1b, and a support rail, wherein the device comprises a shielding element;
Figure 5b shows a side view of an assembly as shown in Figure 5a;
Figure 6a shows a first perspective view of an assembly as shown in Figures 5a and 5b;
Figure 6b shows a second perspective view of an assembly as shown in Figures 5a and 5b;
Figure 7a shows a first perspective view of an assembly as shown in Figures 6a and 6b and a solar panel;
Figure 7b shows a cross section of the assembly as shown in Figure 7a, and
Figures 8a-8d show different views of another assembly according to the invention.

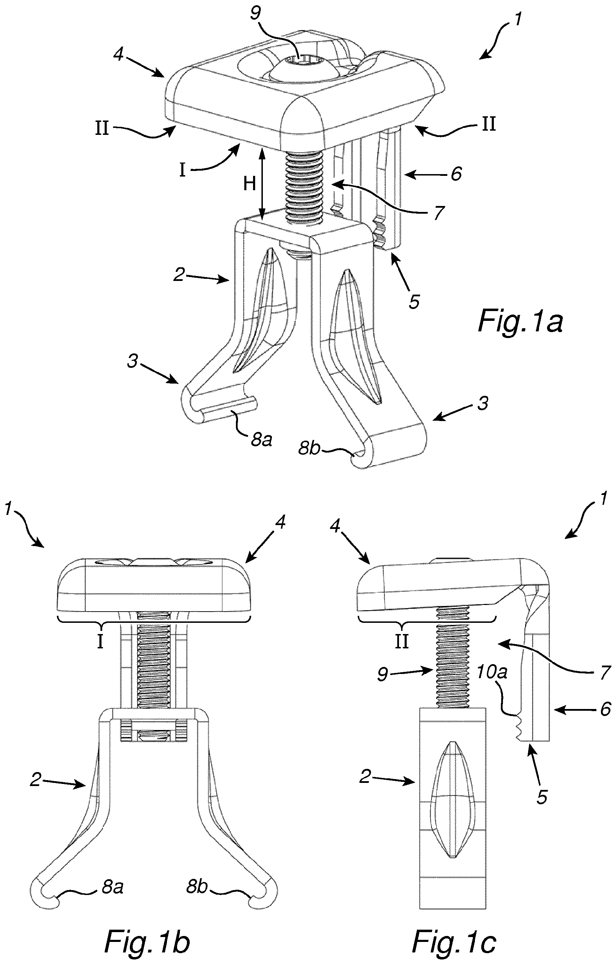

Figure 1a shows a perspective view of a device (1) for fixing solar panels on a support rail (not shown). Figure 1b shows a first cross section of the device (1) as shown in Figure 1a. Figure 1c shows a second cross section of the device (1) as shown in Figure 1a.

The device (1) comprises a fastening element, in particular a spacer (2), which comprises a pair of coupling elements (3) arranged for coupling the spacer (2) on a support rail (not shown), and a clamping element (4), coupled with the spacer (2) and provided with a first clamping zone (I), wherein the clamping element (4) is positioned at a second end of the spacer (2), opposite from the first end, and a locking arm (6) connected to the clamping element (4) at a distance from the first clamping zone (I), wherein the locking arm (6) extends from the clamping element (4) in the direction of the first end of the spacer (2). The spacer (2) does not act only to keep the clamping element (4) at a distance from the support rail, but also to fasten the clamping element (4) on the support rail. A part of the locking arm (6) and a part of the first clamping zone (I) of the clamping element (4) are herein positioned on either side of the spacer (2), such that the first clamping zone (I) is arranged to clampingly fasten at least one solar panel (not shown) on the support rail, and such that the locking arm (6) and the spacer (2) mutually enclose a receiving space (7) for the secured reception of at least a part of a shielding element (not shown) shielding the spacer (2). The device (1) further comprises a pair of second clamping zones (II), which are situated at a distance apart, for bilateral clamping of solar panels (not shown).
In the shown embodiment, the coupling element (2) comprises a pair of deformable, hook-shaped coupling members (8a, 8b) arranged for coupling to a support rail. Each hook-shaped coupling member (8a, 8b) is arranged for cooperation with a receiving space disposed in the support rail, in order to realize a click connection. Figures 1a-c show a first possible orientation of the clamping element (4) with respect to the spacer (2). The clamping element (4) is rotationally connected to the spacer (2) by means of a fastening pin (9), in the shown construction variant realized as a screw element (9). The effective length of the fastening pin (9) is alterable and the distance (H) between the clamping element (4) and the spacer (2) is adjustable. Figures 1a-c show a first possible orientation of the clamping element (4), and especially of the locking arm (6), with respect to the spacer (2). The locking arm (6) is integrally connected to the clamping element (4) and is, on a side facing toward the spacer (2), provided with a first securing element (5). In the shown construction variant, the first securing element (5) is provided with a saw tooth profile (10a).

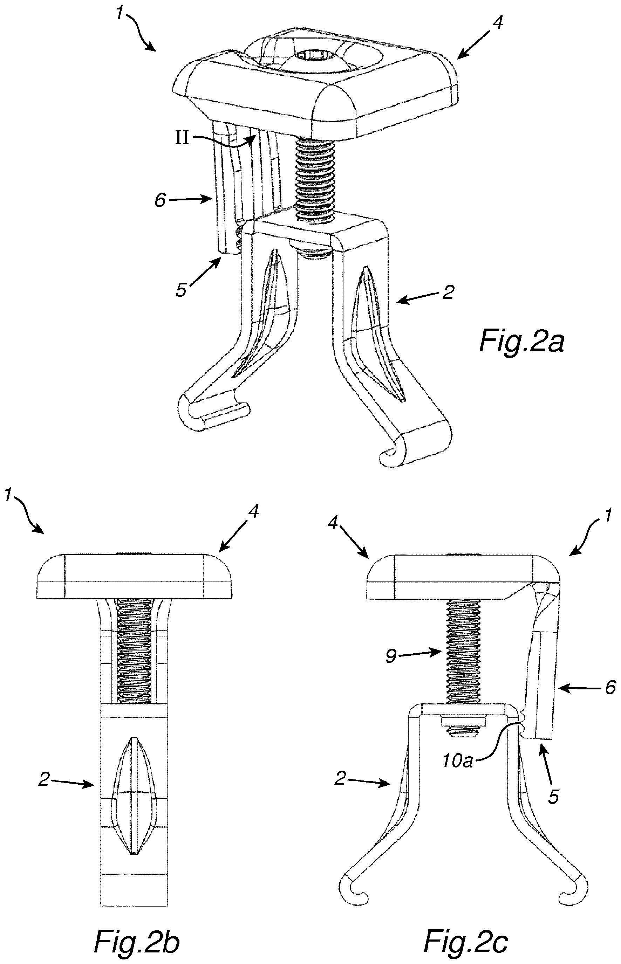

Figure 2a shows a perspective view of the device (1) as shown in Figures 1a-c, in a second possible orientation. Figures 2b and 2c show respectively a first and a second cross section of the device as shown in Figure 2a. Same elements are denoted by reference numerals corresponding to those in Figures 1a-c. The clamping element (4) is herein rotated by a quarter turn, or 90 degrees, with respect to the orientation shown in Figures 1a-c. The saw tooth profile (10a) of the securing element (5) of the locking arm (6) engages, in the shown orientation, a part of the spacer (2).

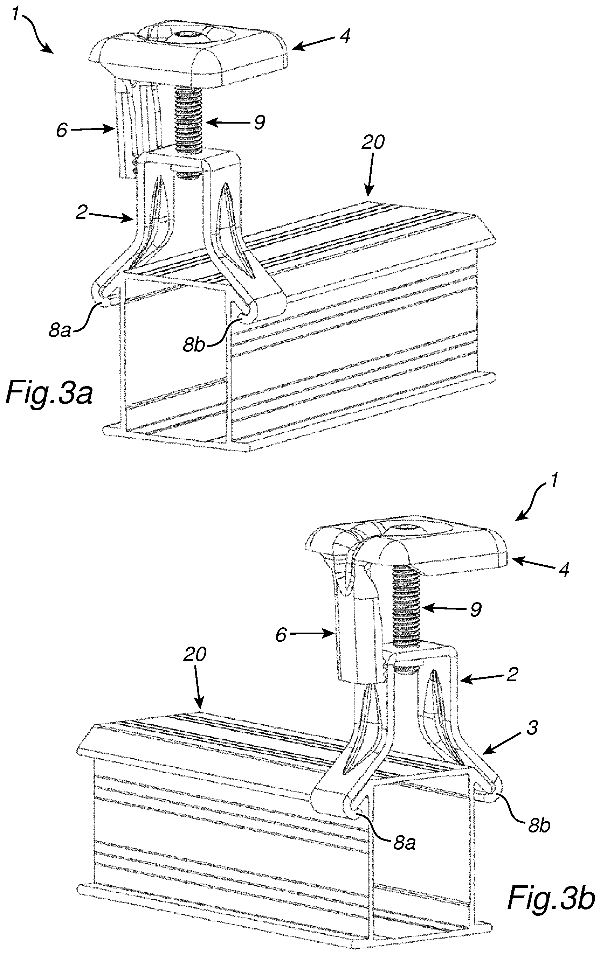

Figures 3a and 3b show respectively a first and a second perspective view of an assembly of the device (1) as shown in Figures 2a-c, and a support rail (20). The spacer (2) is connected to the support rail (20), wherein the coupling element (3) embraces a part of the support rail (20). The hook-shaped coupling members (8a, 8b) of the coupling element (3) herein cooperate with a receiving space disposed in the support rail (20).

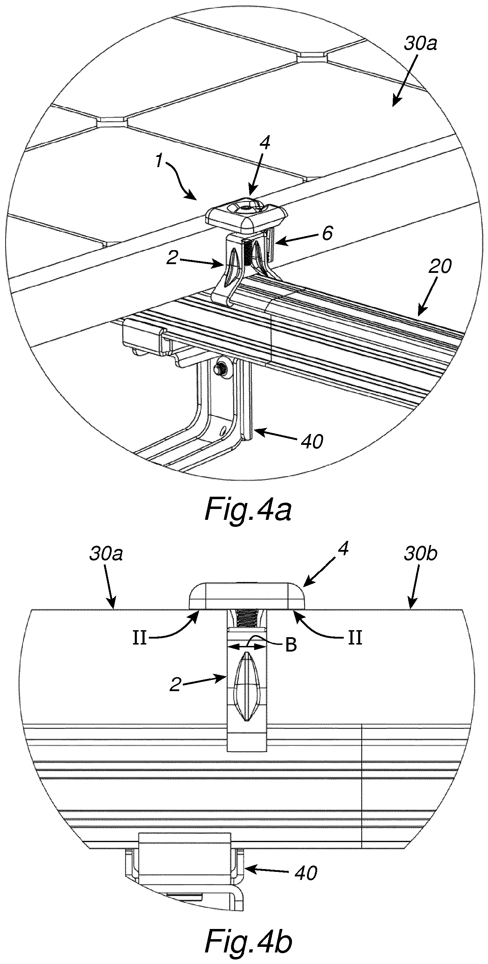

Figure 4a shows a perspective view of an assembly of a device (1) according to the invention and a support rail (20) as shown in Figures 3a and 3b in combination with a first solar panel (30) and a roof hook (40). Figure 4b shows a perspective view of an assembly as shown in Figure 4a and a second solar panel (30b). The two second clamping zones (II) of the clamping element (4) facilitate bilateral clamping of solar panels (30a, 30b). The spacer (2) is in Figure 4b engaged on two sides by the solar panels (30a, 30b). The width (B) of the locking arm (6) is in the shown embodiment equal to the width of the spacer (2), wherein this width (B) is determinant of the distance between both solar panels (30a, 30b).
The two second clamping zones (II) engage a side of the solar panels (30a, 30b) which faces away from the roof. The whole assembly can be positioned by means of the roof hook (40a) on a roof (not shown).

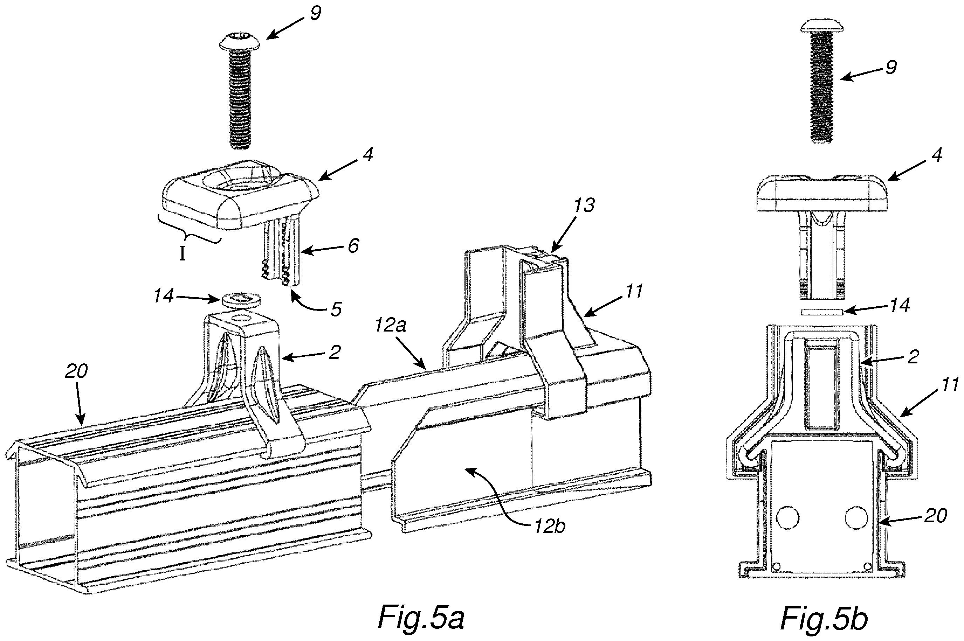

Figure 5a shows a perspective view of an exploded assembly of the device (1), in an orientation as shown in Figures 1a-c, and a support rail (20), wherein the device (1) comprises a shielding element (11). Figure 5b shows a side view of the assembly as shown in Figure 5a. The shielding element (11) is arranged for coupling to the support rail (20). The shielding element (11) comprises a pair of extending profile parts (12a, 12b), which are arranged for support on a part of the support rail (20). The shielding element (11) also comprises a second securing element (13) arranged for cooperation with the first securing element (5) of the clamping element (4). In the shown assembly, the fastening pin (9) cooperates with an anti-loss ring (14).

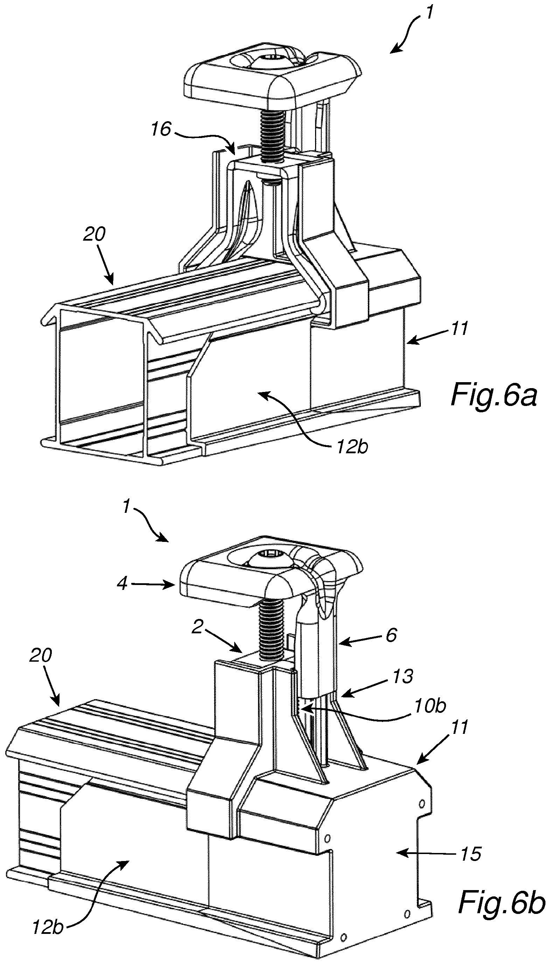

Figures 6a and 6b show respectively a first and a second perspective view of the assembly of the device (1) as shown in Figures 5a and 5b in a coupled state. The first securing element (5) of the locking arm (6) of the clamping element (4) herein engages the second securing element (13) of the shielding element (11) under bias. The second securing element (13) is likewise provided with a saw tooth profile (10b), which saw tooth profile (10b) is complementary to the saw tooth profile (10a) of the first securing element (5) of the clamping element (4). The spacer (11) encloses both the support rail (20) and the spacer (2) on more than one side. The shielding element (11) is provided with a receiving space (16) for receiving a part of the spacer (2). The profile parts (12a, 12b) of the shielding element (11) are realized complementary to the support rail (20) and engage the support rail (20) multilaterally. In the shown construction variant of the shielding element (11), the shielding element (11) comprises a closed end part (15), whereby the shielding element (11) substantially fully closes off the support rail (20).

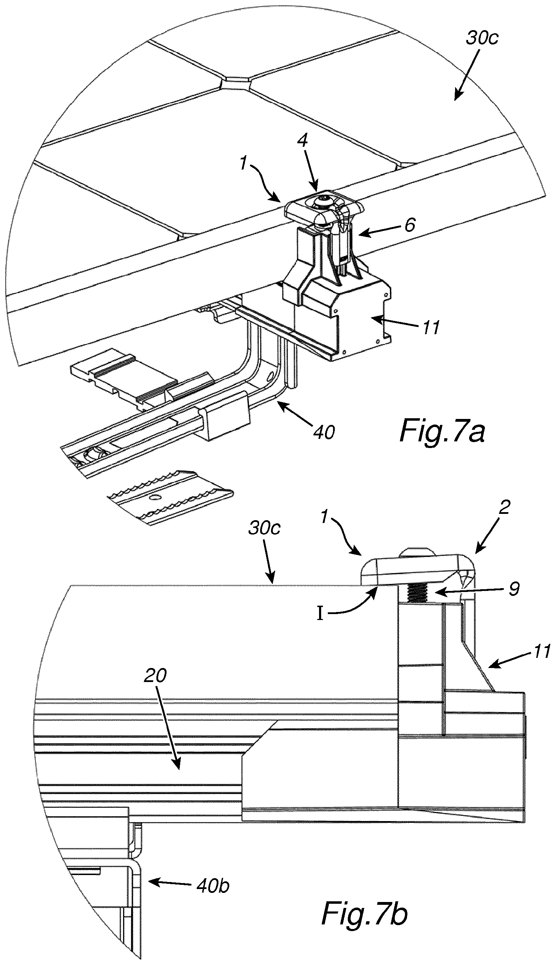

Figure 7a shows a perspective view of an assembly of a device (1) according to the invention as shown in Figures 6a and 6b in combination with a solar panel (30c) and a roof hook (40). Figure 7b shows a cross section of the assembly as shown in Figure 7a. The device (1), and in particular the shielding element (11), is positioned on an end side of the support rail (20). The first clamping zone (I) of the clamping element (4) herein facilitates a clamping fastening of the solar panel (30c) on the support rail (20).

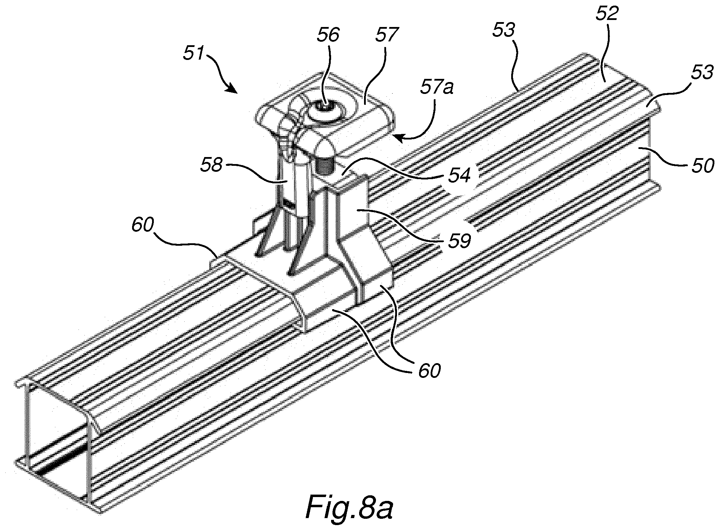

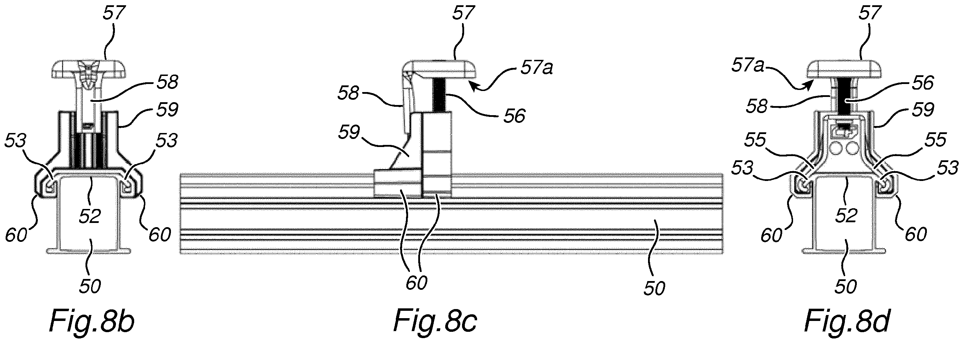

Figures 8a-8d show different views of an assembly, fastened on a support rail (50), of another device (51) according to the invention. The support rail (50), also referred to as a mounting rail, is formed by an extrusion profile made of aluminium. The support rail (50) comprises, on a top side (52), two opposing, overhanging longitudinal rims (53). The longitudinal rims (53) herein extend in the downward direction and therefore enclose an angle with the top side (52) of the support rail. The device (51) is arranged for fixing solar panels on a support rail, in particular for solar panels. The device (51) comprises a fastening element (54), in particular at least one spacer, which fastening element (54) comprises at a first end (54a) two mutually spaced coupling elements (55). Each coupling element (55) is here shaped in the form of a hook and here embraces a longitudinal rim (53) of the support rail (50), such that the fastening element (54) is locked in the vertical direction (transversely to the top side (52) of the support rail (50)), whilst the fastening element (54) remains displaceable (slidable) with respect to the support rail (50) (in the longitudinal direction of the support rail (50)). By means of a bolt (56), a clamping element (57) is coupled with the fastening element (54), wherein the distance between the clamping element (57) and the fastening element (54) is alterable, yet wherein the maximum displacement is limited by the bolt (56). The clamping element (57) is provided with a first clamping zone (57a) for the clamping of at least one solar panel between the clamping element (57), at the site of the first clamping zone (57a), and the support rail (50). The device (51) also comprises a locking arm (58) connected to the clamping element (57), wherein the locking arm (58) extends from the clamping element (57) in the direction of the first end (54a) of the fastening element (54), wherein at least a part of the locking arm (58) and at least a part of the first clamping zone (57a) of the clamping element are positioned on either side of the fastening element (54). The locking arm (58) and the fastening element (54) mutually enclose a receiving space for the secured reception of a part of a shielding element (59) shielding the fastening element (54). The locking arm (58) will herein generally exert a bias on the shielding element (59) in a direction facing toward the fastening element (54), whereby the shielding element (59) is relatively tightly confined in the receiving space. In this secured state, a play between the shielding element (59) and the fastening element (54) is preferably not, or barely, present. If decoupling of the shielding element (59) is desired, then the bolt (56) will be rotated in the upward direction, whereby the locking arm (58) will come sufficiently loose from the shielding element (59) to enable the shielding element (59) to be removed from the receiving space. The shielding element (59) is generally formed by a separate component, which, together with the assembly of the fastening element (54), the bolt (56), and the clamping element (57) provided with the locking arm (58), can be sold as a 'kit of parts'. The shielding element (59) also comprises a pair of (hook-shaped) coupling elements (60), wherein each coupling element (60) embraces a longitudinal rim (53) of the support rail (50). This embrace is such that the shielding element (59) is locked in the vertical direction (transversely to the top side (52) of the support rail (50)), whilst the shielding element (59) remains displaceable (slidable) with respect to the support rail (50) (in the longitudinal direction of the support rail (50)). In this way, the complete device (51) can thus be moved over the support rail (50), which facilitates the positioning of the device (51) with respect to the (stationary) support rail (50). In the perspective view according to Figure 8a, the internal view according to Figure 8b, the external view according to Figure 8d, and the side view according to Figure 8c, is shown that the shielding element (59) multilaterally encloses the fastening element, wherein the coupling elements (55) of the fastening element (54) are substantially completely shielded (with the exception of an end inner side of the coupling elements (55)). The coupling elements (60) of the shielding element (59) herein enclose/embrace also the coupling elements (55) of the fastening elements (54) under the longitudinal rims (53) of the support rail (50) (see Figure 8d). The end inner side of the fastening element (54), which inner side is left uncovered by the shielding element (59), will be substantially fully covered, during use, by one or more clamped solar panels (not represented).

By the verb 'comprise' which is used in this patent specification, and conjugations thereof, is understood not only 'comprise', but also the terms 'include', 'substantially consist of', 'formed by', and conjugations thereof.

## Claims

1. Device (1) for fixing solar panels (30) on a support rail (20), comprising:
- at least one fastening element (2), in particular at least one spacer (2), which fastening element (2) comprises at a first end at least one coupling element (3) arranged for coupling the fastening element (2) on a support rail (20), in particular a support rail (20) for solar panels (30), and
- at least one clamping element (4) coupled with at least one fastening element (2) and provided with at least one first clamping zone, wherein the clamping element (4) is positioned at a second end, opposite from the first end, of the fastening element (2),
- a locking arm (6) connected to the clamping element (4) at a distance from the first clamping zone, wherein the locking arm (6) extends from the clamping element (4) in the direction of the first end of the fastening element (2), wherein at least a part of the locking arm (6) and at least a part of the first clamping zone of the clamping element (4) can be positioned on either side of the fastening element (2), such that the first clamping zone is arranged to clampingly fasten at least one solar panel (30) on the support rail (20), and such that the locking arm (6) and the fastening element (2) mutually enclose a receiving space for the secured reception of at least a part of a shielding element (11) shielding the fastening element (2), and
- at least one shielding element (11), wherein at least a part of the shielding element (11) is arranged to be received in a secured manner in the receiving space enclosed by the fastening element (2) and the locking arm (6), and wherein the shielding element (11) is arranged for shielding at least a part of the fastening element (2),
wherein the locking arm (6) is, on a side facing toward the fastening element (2), provided with at least one first securing element (5) for securing the shielding element (11) in the receiving space, wherein the first securing element (5) is formed by a securing tooth or a toothed profile (10).

2. Device (1) according to Claim 1, wherein the orientation of the at least one clamping element (4) and the at least one fastening element (2), in particular the at least one spacer (2), is alterable, and wherein the distance between the at least one clamping element (4) and the at least one fastening element (2), in particular the at least one spacer (2), is alterable.

3. Device (1) according to Claim 2, wherein the at least one clamping element (4) is rotationally connected to the spacer, preferably over an angle greater than or equal to 90 degrees.

4. Device (1) according to one of the preceding claims, wherein the device (1) comprises at least one fastening pin (9), and wherein the at least one clamping element (4) is connected to the fastening element (2) via the at least one fastening pin (9).

5. Device (1) according to one of the preceding claims, wherein at least one clamping element (4) is provided with at least two, preferably mutually spaced, second clamping zones arranged for bilateral clamping of solar panels (30), such that at least two solar panels (30), positioned on either side of the fastening element (2), are simultaneously clampingly fastened on the support rail (20) by the clamping element (4), wherein the first clamping zone preferably partially overlaps with multiple second clamping zones.

6. Device (1) according to one of the preceding claims, wherein the fastening element (2) comprises at the first end a plurality of coupling elements (3), wherein the coupling elements (3) are jointly arranged for multilateral cooperation with opposing outer sides of the support rail (20).

7. Device (1) according to one of the preceding claims, wherein at least one coupling element (3) comprises at least one hook-shaped member (8) for cooperation with the support rail (20).

8. Device (1) according to one of the preceding claims, wherein the shielding element (11) is provided with at least one second securing element (13) arranged for cooperation with the first securing element (5) of the locking arm (6).

9. Device (1) according to one of the preceding claims, wherein the shielding element (11) is arranged for coupling, preferably in a slidable manner, to the support rail (20).

10. Device (1) according to one of the preceding claims, wherein the locking arm (6) is arranged for engaging the shielding element (11) under bias.

11. Assembly of at least one device (1) according to one of the preceding claims and at least one support rail (20), wherein each device (1) is connected to at least one support rail (20) by means of the at least one coupling element (3).

12. Assembly according to Claim 11, wherein the assembly comprises at least one solar panel (30), which is clamped in a secured manner between the support rail (20) and the first clamping zone of the clamping element (4) of at least one device (1), and wherein the aforementioned device (1) comprises at least one shielding element (11), wherein at least a part of the shielding element (11) is received in a secured manner in the receiving space enclosed by the fastening element (2), in particular a spacer (2), and the locking arm (6), and wherein the shielding element (11) shields at least a part of the fastening element (2).

13. Method for fastening solar panels (30) on a support rail (20) by using a device (1) according to one of Claims 1-10, comprising the steps:
A) securing of the fastening element (2), in particular a spacer (2), on a support rail (20) by means of the at least one coupling element (3),
B) positioning of a part of at least one solar panel (30) to be clamped in a receiving space formed between the first clamping zone of the clamping element (4) and the support rail (20),
C) placing of at least a part of a shielding element (11) in a receiving space enclosed by the fastening element (2) and the locking arm (6), such that at least a part of the fastening element (2) is shielded by the shielding element (11),
D) clamping of the at least one solar panel (30) in a secured manner by the clamping element (4), and
E) securing of the shielding element (11) in the receiving space by the locking arm (6).

14. Method according to Claim 13, wherein step D) and E) are carried out simultaneously.

## Patentansprüche

1. Einrichtung (1) zum Fixieren von Solarpaneelen (30) auf einer Tragschiene (20), umfassend:
- mindestens ein Befestigungselement (2), insbesondere mindestens ein Distanzstück (2), wobei das Befestigungselement (2) an einem ersten Ende mindestens ein Kopplungselement (3) umfasst, das zum Koppeln des Befestigungselements (2) auf eine Tragschiene (20), insbesondere eine Tragschiene (20) für Solarpaneele (30), eingerichtet ist, und
- mindestens ein Einspannelement (4), das mit mindestens einem Befestigungselement (2) gekoppelt ist und mit mindestens einem ersten Einspannbereich versehen ist, wobei das Einspannelement (4) an einem dem ersten Ende gegenüberliegenden zweiten Ende des Befestigungselements (2) positioniert ist,
- einen Verriegelungsarm (6), der in einem Abstand zum ersten Einspannbereich mit dem Einspannelement (4) verbunden ist, wobei sich der Verriegelungsarm (6) vom Einspannelement (4) aus in Richtung des ersten Endes des Befestigungselements (2) erstreckt, wobei zumindest ein Teil des Verriegelungsarms (6) und zumindest ein Teil des ersten Einspannbereichs des Einspannelements (4) auf jeder Seite des Befestigungselements (2) positioniert sein können, derart, dass der erste Einspannbereich so eingerichtet ist, dass dieser mindestens ein Solarpaneel (30) auf der Tragschiene (20) einspannend befestigt, und derart, dass der Verriegelungsarm (6) und das Befestigungselement (2) gemeinsam einen Aufnahmeraum zur gesicherten Aufnahme zumindest eines Teils eines das Befestigungselement (2) abschirmenden Abschirmelements (11) umschließen, und
- mindestens ein Abschirmelement (11), wobei zumindest ein Teil des Abschirmelements (11) so eingerichtet ist, dass es gesichert im vom Befestigungselement (2) und dem Verriegelungsarm (6) umschlossenen Aufnahmeraum aufgenommen ist, und wobei das Abschirmelement (11) zum Abschirmen zumindest eines Teils des Befestigungselements (2) eingerichtet ist,
wobei der Verriegelungsarm (6) auf einer dem Befestigungselement (2) zugewandten Seite mit mindestens einem ersten Sicherungselement (5) zum Sichern des Abschirmelements (11) im Aufnahmeraum versehen ist, wobei das erste Sicherungselement (5) durch einen Sicherungszahn oder ein Zahnprofil (10) gebildet ist.

2. Einrichtung (1) nach Anspruch 1, wobei die Ausrichtung des mindestens einen Einspannelements (4) und des mindestens einen Befestigungselements (2), insbesondere des mindestens einen Distanzstücks (2), veränderbar ist, und wobei der Abstand zwischen dem mindestens einen Einspannelement (4) und dem mindestens einen Befestigungselement (2), insbesondere dem mindestens einen Distanzstück (2), veränderbar ist.

3. Einrichtung (1) nach Anspruch 2, wobei das mindestens eine Einspannelement (4) mit dem Distanzstück drehverbunden ist, bevorzugt über einen Winkel größer oder gleich 90 Grad.

4. Einrichtung (1) nach einem der vorhergehenden Ansprüche, wobei die Einrichtung (1) mindestens einen Befestigungsstift (9) umfasst und wobei das mindestens eine Einspannelement (4) mit dem Befestigungselement (2) über den mindestens einen Befestigungsstift (9) verbunden ist.

5. Einrichtung (1) nach einem der vorhergehenden Ansprüche, wobei mindestens ein Einspannelement (4) mit mindestens zwei, bevorzugt zueinander beabstandeten, zweiten Einspannbereichen versehen ist, die zum beidseitigen Einspannen von Solarpaneelen (30) eingerichtet sind, derart, dass mindestens zwei Solarpaneele (30), die auf jeder Seite des Befestigungselements (2) positioniert sind, gleichzeitig vom Einspannelement (4) einspannend auf der Tragschiene (20) befestigt werden, wobei der erste Einspannbereich bevorzugt teilweise mit mehreren zweiten Einspannbereichen überlappt.

6. Einrichtung (1) nach einem der vorhergehenden Ansprüche, wobei das Befestigungselement (2) am ersten Ende eine Vielzahl von Kopplungselementen (3) umfasst, wobei die Kopplungselemente (3) zusammen zum mehrseitigen Zusammenwirken mit entgegengesetzten Außenseiten der Tragschiene (20) eingerichtet sind.

7. Einrichtung (1) nach einem der vorhergehenden Ansprüche, wobei mindestens ein Kopplungselement (3) mindestens ein hakenförmiges Element (8) zum Zusammenwirken mit der Tragschiene (20) umfasst.

8. Einrichtung (1) nach einem der vorhergehenden Ansprüche, wobei das Abschirmelement (11) mit mindestens einem zweiten Sicherungselement (13) versehen ist, das zum Zusammenwirken mit dem ersten Sicherungselement (5) des Verriegelungsarms (6) eingerichtet ist.

9. Einrichtung (1) nach einem der vorhergehenden Ansprüche, wobei das Abschirmelement (11) zum bevorzugt gleitend erfolgenden Koppeln an die Tragschiene (20) eingerichtet ist.

10. Einrichtung (1) nach einem der vorhergehenden Ansprüche, wobei der Verriegelungsarm (6) zum Eingreifen am Abschirmelement (11) unter Vorspannung eingerichtet ist.

11. Anordnung aus mindestens einer Einrichtung (1) nach einem der vorhergehenden Ansprüche und mindestens einer Tragschiene (20), wobei jede Einrichtung (1) mittels des mindestens einen Kopplungselements (3) mit mindestens einer Tragschiene (20) verbunden ist.

12. Anordnung nach Anspruch 11, wobei die Anordnung mindestens ein Solarpaneel (30) umfasst, das gesichert zwischen der Tragschiene (20) und dem ersten Einspannbereich des Einspannelements (4) mindestens einer Einrichtung (1) eingespannt ist, und wobei die vorstehend genannte Einrichtung (1) mindestens ein Abschirmelement (11) umfasst, wobei zumindest ein Teil des Abschirmelements (11) gesichert im vom Befestigungselement (2), insbesondere einem Distanzstück (2), und dem Verriegelungsarm (6) umschlossenen Aufnahmeraum aufgenommen ist und wobei das Abschirmelement (11) zumindest einen Teil des Befestigungselements (2) abschirmt.

13. Verfahren zum Befestigen von Solarpaneelen (30) auf einer Tragschiene (20) durch Verwenden einer Einrichtung (1) nach einem der Ansprüche 1 bis 10, umfassend die folgenden Schritte:
A) Sichern des Befestigungselements (2), insbesondere eines Distanzstücks (2), auf einer Tragschiene (20) mittels des mindestens einen Kopplungselements (3),
B) Positionieren eines Teils mindestens eines einzuspannenden Solarpaneels (30) in einem zwischen dem ersten Einspannbereich des Einspannelements (4) und der Tragschiene (20) gebildeten Aufnahmeraum,
C) Platzieren zumindest eines Teils eines Abschirmelements (11) in einem vom Befestigungselement (2) und dem Verriegelungsarm (6) umschlossenen Aufnahmeraum, derart, dass zumindest ein Teil des Befestigungselements (2) durch das Abschirmelement (11) abgeschirmt wird,
D) gesichertes Einspannen des mindestens einen Solarpaneels (30) durch das Einspannelement (4) und
E) Sichern des Abschirmelements (11) im Aufnahmeraum durch den Verriegelungsarm (6).

14. Verfahren nach Anspruch 13, wobei Schritt D) und E) gleichzeitig durchgeführt werden.

## Revendications

1. Dispositif (1) pour fixer des panneaux solaires (30) sur un rail de support (20), comprenant :
- au moins un élément de fixation (2), en particulier au moins une entretoise (2), lequel élément de fixation (2) comprend à une première extrémité au moins un élément d'accouplement (3) agencé pour coupler l'élément de fixation (2) sur un rail de support (20), en particulier un rail de support (20) pour panneaux solaires (30), et
- au moins un élément de serrage (4) couplé avec au moins un élément de fixation (2) et muni d'au moins une première zone de serrage, l'élément de serrage (4) étant positionné à une deuxième extrémité, à l'opposé de la première extrémité, de l'élément de fixation (2),
- un bras de blocage (6) relié à l'élément de serrage (4) à une distance de la première zone de serrage, le bras de blocage (6) s'étendant depuis l'élément de serrage (4) dans la direction de la première extrémité de l'élément de fixation (2), au moins une partie du bras de blocage (6) et au moins une partie de la première zone de serrage de l'élément de serrage (4) pouvant être positionnées de chaque côté de l'élément de fixation (2), de sorte que la première zone de serrage est agencée pour fixer par serrage au moins un panneau solaire (30) sur le rail de support (20), et de sorte que le bras de blocage (6) et l'élément de fixation (2) enferment mutuellement un espace de réception pour la réception stabilisée d'au moins une partie d'un élément de protection (11) protégeant l'élément de fixation (2), et
- au moins un élément de protection (11), dans lequel au moins une partie de l'élément de protection (11) est agencée pour être reçue de manière stabilisée dans l'espace de réception enfermé par l'élément de fixation (2) et le bras de blocage (6), et dans lequel l'élément de protection (11) est agencé pour protéger au moins une partie de l'élément de fixation (2),
dans lequel le bras de blocage (6) est, sur un côté tourné vers l'élément de fixation (2), muni d'au moins un premier élément de stabilisation (5) pour stabiliser l'élément de protection (11) dans l'espace de réception, dans lequel le premier élément de stabilisation (5) est formé par une dent de stabilisation ou un profil denté (10) .

2. Dispositif (1) selon la revendication 1, dans lequel l'orientation dudit au moins un élément de serrage (4) et dudit au moins un élément de fixation (2), en particulier de ladite au moins une entretoise (2), est modifiable, et dans lequel la distance entre ledit au moins un élément de serrage (4) et ledit au moins un élément de fixation (2), en particulier ladite au moins une entretoise (2), est modifiable.

3. Dispositif (1) selon la revendication 2, dans lequel ledit au moins un élément de serrage (4) est relié en rotation à l'entretoise, de préférence sur un angle supérieur ou égal à 90 degrés.

4. Dispositif (1) selon l'une quelconque des revendications précédentes, dans lequel le dispositif (1) comprend au moins une cheville de fixation (9), et dans lequel ledit au moins un élément de serrage (4) est relié à l'élément de fixation (2) par l'intermédiaire de ladite au moins une cheville de fixation (9).

5. Dispositif (1) selon l'une quelconque des revendications précédentes, dans lequel au moins un élément de serrage (4) est muni d'au moins deux deuxièmes zones de serrage, de préférence mutuellement espacées, agencées pour un serrage bilatéral de panneaux solaires (30), de sorte qu'au moins deux panneaux solaires (30), positionnés de chaque côté de l'élément de fixation (2), sont fixés simultanément par serrage sur le rail de support (20) par l'élément de serrage (4), la première zone de serrage chevauchant de préférence partiellement plusieurs deuxièmes zones de serrage.

6. Dispositif (1) selon l'une quelconque des revendications précédentes, dans lequel l'élément de fixation (2) comprend à la première extrémité une pluralité d'éléments d'accouplement (3), les éléments d'accouplement (3) étant ensemble agencés pour une coopération multilatérale avec des côtés extérieurs opposés du rail de support (20).

7. Dispositif (1) selon l'une quelconque des revendications précédentes, dans lequel au moins un élément d'accouplement (3) comprend au moins un élément en forme de crochet (8) pour coopérer avec le rail de support (20).

8. Dispositif (1) selon l'une quelconque des revendications précédentes, dans lequel l'élément de protection (11) est muni d'au moins un deuxième élément de stabilisation (13) agencé pour une coopération avec le premier élément de stabilisation (5) du bras de blocage (6).

9. Dispositif (1) selon l'une quelconque des revendications précédentes, dans lequel l'élément de protection (11) est agencé pour un accouplement de préférence coulissant avec le rail de support (20).

10. Dispositif (1) selon l'une quelconque des revendications précédentes, dans lequel le bras de blocage (6) est agencé pour mettre en prise l'élément de protection (11) sous précontrainte.

11. Ensemble composé d'au moins un dispositif (1) selon l'une quelconque des revendications précédentes et d'au moins un rail de support (20), chaque dispositif (1) étant connecté à au moins un rail de support (20) au moyen dudit au moins un élément d'accouplement (3).

12. Ensemble selon la revendication 11, dans lequel l'ensemble comprend au moins un panneau solaire (30), qui est serré de manière stabilisée entre le rail de support (20) et la première zone de serrage de l'élément de serrage (4) d'au moins un dispositif (1), et dans lequel ledit dispositif (1) comprend au moins un élément de protection (11), au moins une partie de l'élément de protection (11) étant reçue de manière stabilisée dans l'espace de réception enfermé par l'élément de fixation (2), en particulier une entretoise (2), et le bras de blocage (6), et l'élément de protection (11) protégeant au moins une partie de l'élément de fixation (2).

13. Procédé pour fixer des panneaux solaires (30) sur un rail de support (20) en utilisant un dispositif (1) selon l'une quelconque des revendications 1 à 10, comprenant les étapes consistant à :
A) stabiliser l'élément de fixation (2), en particulier une entretoise (2), sur un rail de support (20) au moyen dudit au moins un élément d'accouplement (3),
B) positionner une partie d'au moins un panneau solaire (30) à serrer dans un espace de réception formé entre la première zone de serrage de l'élément de serrage (4) et le rail de support (20),
C) placer au moins une partie d'un élément de protection (11) dans un espace de réception enfermé par l'élément de fixation (2) et le bras de blocage (6), de sorte qu'au moins une partie de l'élément de fixation (2) est protégée par l'élément de protection (11),
D) serrer ledit au moins un panneau solaire (30) de manière stabilisée par l'élément de serrage (4), et
E) stabiliser l'élément de protection (11) dans l'espace de réception par le bras de blocage (6).

14. Procédé selon la revendication 13, dans lequel les étapes D) et E) sont exécutées simultanément.
